(19) **Europäisches Patentamt / European Patent Office / Office européen des brevets**

(11) **EP 3 877 135 B1**

(12) **EUROPEAN PATENT SPECIFICATION**

(45) Date of publication and mention of the grant of the patent:
**10.07.2024 Bulletin 2024/28**

(21) Application number: **19835945.7**

(22) Date of filing: **05.11.2019**

(51) International Patent Classification (IPC):
**B29C 45/00** (2006.01)    **C08L 23/12** (2006.01)
**B29K 23/00** (2006.01)    **B29K 105/00** (2006.01)

(52) Cooperative Patent Classification (CPC):
(C-Sets available)
**B29C 45/0001; C08L 23/12;** B29K 2023/12;
B29K 2105/0032; C08L 2205/08; C08L 2207/02

(Cont.)

(86) International application number:
**PCT/US2019/059899**

(87) International publication number:
**WO 2020/097102 (14.05.2020 Gazette 2020/20)**

(54) **HIGH GLOSS BLACK TPO REPLACING PAINT**

HOCHGLÄNZENDER SCHWARZER TPO-ERSATZLACK

PEINTURE DE REMPLACEMENT NOIRE À BRILLANT ÉLEVÉ À BASE DE POLYOLÉFINE THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2018   US 201862755859 P**

(43) Date of publication of application:
**15.09.2021   Bulletin 2021/37**

(73) Proprietor: **Equistar Chemicals, LP**
**Houston, TX 77010 (US)**

(72) Inventors:
• **BANTA, Perry J.**
**Houston, TX 77010 (US)**
• **DAMMANN, Michael J.**
**Houston, TX 77010 (US)**

(74) Representative: **LyondellBasell**
**c/o Basell Poliolefine Italia**
**Intellectual Property**
**P.le Donegani 12**
**44122 Ferrara (IT)**

(56) References cited:
WO-A2-2004/044048      JP-A- 2013 112 781
US-A1- 2009 088 510      US-A1- 2010 099 820
US-A1- 2015 099 840

(52) Cooperative Patent Classification (CPC): (Cont.)

C-Sets
**C08L 23/12, C08L 23/12, C08L 23/16,
C08L 53/025, C08L 53/025, C08K 3/013;
C08L 23/12, C08L 23/16, C08L 53/025, C08K 3/013**

**Description**

FIELD OF THE INVENTION

In general, the present disclosure relates to the field of chemistry. More specifically, the present disclosure relates to polyolefin-based compositions. In some embodiments, the polyolefin-based compositions disclosed herein are useful as components for automobiles and other products, including injection molded parts.

DESCRIPTION OF RELATED ART

Governmental regulations have been pushing the automotive industry to increase the fuel efficiency of their vehicles (e.g., Corporate Average Fuel Economy (CAFE) standards in the United States (U.S.) and $CO_2$ limits in the European Union (E.U.)). Automotive manufactures have been attempting to meet this goal through several practices, for example, increase efficiency of the engine as well as weight reduction for the entire automotive vehicle.

One avenue automotive manufactures have been utilizing to lightweight vehicles has been replacing components comprising of higher density materials with low density polyolefin resins. To reduce cost, labor and time spent in manufacturing, the auto industry actively seeks out alternatives to engineered resins, painted materials, and other costly and labor-intensive manufacturing materials and processes. Polyolefin based resins are currently used for many components of automotive vehicles (e.g., facias, rear bumpers, interior door pillars, grills, etc.).

Accent trims, such as grills, are often an automotive component that auto manufactures seek a vibrant color in a high gloss, sleek finish. These materials must maintain a high gloss finish, as well as provide excellent resistance to scratch and marring. Most interest has been seen in a high gloss material that is a rich, jetty black in color, often referred to as 'Piano Black'.

US 2010/099820 discloses compositions comprising (A) a thermoplastic oletin resin (polypropylene), (B) a compatibilizer (SEBS) and (C) a pigment (Pueblo Gais Color Conc). However it does not relate to the use of carbon black.

Traditionally, these components of the automotive vehicles would be a TPO or other moldable plastic that is then painted or filmed to provide the high gloss finish in the desired color. This process of molding, painting, and curing is often not only labor intensive, but time consuming as well as costly. Automotive part molders as well as auto manufactures themselves sought

alternative solutions. It is possible to have the TPO material molded in color with both gloss and color in mind. However, it has been found extremely difficult for TPO manufactured to produce a material that meets the qualities of a high gloss finish while also achieving the vibrant jet black matched to Piano black.

Engineering resins is an attractive solution as no painting or curing is needed after injection molding and it is possible to have the resin molded in the desired jet black. However, these engineered resins are typically higher in density and offer very poor resistance to scratch and mar.

To date, there does not exist a product on the market that can be molded in color to be high gloss in the vibrant jet black color, while still maintaining excellent resistance to scratch and mar. This invention outlines the development of a low density, high gloss TPO with excellent scratch and mar resistance as well as a vibrant jet black color matching that of a painted material, typically referred to as 'Piano Black'. This product is beneficial for molders as it cuts down manufacturing process to just injection molding, as no other steps are needed such as painting, as well as reduces the overall vehicle weight for the automotive manufacture.

SUMMARY

The present disclosure provides a molded in-color composition as defined in claims 1-3

In some embodiments, the molded in-color composition of any of the preceding paragraphs has a tensile yield strength from 16 to 26 MPa.

In some embodiments, the molded in-color composition of any of the preceding paragraphs has a density from 0.88 to 0.94 $g/cm^3$.

In some embodiments, the molded in-color composition of any of the preceding paragraphs includes one or more additives.

In some embodiments, the molded in-color composition of the preceding paragraph, wherein the molded in-color composition has:

(i) a melt flow rate from 27 to 34 g/10 min (230°C, 2.16 kg),

(ii) a flexural modulus from 600 to 1200 MPa,

(iii) a notched Izod at 23°C from 20 to 50 kJ/m$^2$,

(iv) a notched Izod at 0°C from 4 to 20 kJ/m$^2$,

(v) a notched Izod at -40°C from 2 to 6 kJ/m$^2$,

(vi) a tensile yield strength from 16 to 26 MPa,

(vii) a gloss 60° from 76 to 90 GU, and

(viii) a density from 0.88 to 0.94 g/cm$^3$.

In some embodiments, the molded in-color composition of any of the preceding paragraphs wherein the molded in-composition further comprises one or more additives.

An article formed from the molded in-color composition of any of the preceding paragraphs.

In some embodiments, the article of claim the article of the preceding paragraph is a part of an automobile.

DETAILED DESCRIPTION

Definitions

The use of the word "a" or "an," when used in conjunction with the term "comprising" in the claims and/or the specification, may mean "one," but it is also consistent with the meaning of "one or more," "at least one," and "one or more than one."

Throughout this application, the term " " is used to indicate that a value includes the variation of error for the device, the method being employed to determine the value, or the variation that exists among the studies.

The terms "comprise," "have" and "include" are open-ended linking verbs. Any forms or tenses of one or more of these verbs, such as "comprises," "comprising," "has," "having," "includes" and "including," are also open-ended. For example, any method that "comprises," "has" or "includes" one or more steps is not limited to possessing only those one or more steps and also covers other unlisted steps.

A "method" is a series of one or more steps undertaken that lead to a final product, result or outcome. As used herein, the word "method" is used interchangeably with the word "process."

The term "olefin" as used in this application refers to an alkene wherein at least one carbon-carbon double bond in the molecule is a terminal double bond. Some non-limiting examples of olefins include styrene, ethylene, propylene, butene, pentene, hexene, heptene, octene, nonene, decene, or dodecene.

In the present description, the term "α-olefin" or "alpha-olefin" means an olefin of the general formula $CH_2=CH-R$, wherein R is a linear or branched alkyl containing from 1 to 10 carbon atoms. The α-olefin can be selected, for example, from propylene, 1-butene, 1-pentene, 1-hexene, 1-octene, 1-dodecene and the like.

In the present description, the term "elastomer" refers to polymer compounds having rubber-like properties and crystallinity in the range of from 0 percent to 20 percent. In some embodiments, the polymer can have crystallinity in the range of from 0 percent to 5 percent.

In the present description, the term "elastomeric ethylene copolymer composition" refers to a composition made from and/or containing at least one elastomeric ethylene copolymer.

In the present description, the term "heterophasic polypropylene copolymer" refers to a copolymer (or rubber copolymer) prepared by the copolymerization of ethylene and propylene dispersed into a polypropylene matrix. The polypropylene matrix may be a homopolymer or a copolymer.

In the present description, the term "homopolymer" and similar terms mean a polymer consisting solely or essentially of units derived from a single kind of monomer, e.g., ethylene homopolymer is a polymer comprised solely or essentially of units derived from ethylene, and propylene homopolymer is a polymer comprised solely or essentially of units derived from propylene, and the like.

In the present description, the term "impact-modifying compatibilizer" means a compound that synergistically interacts with the interface of the elastomeric ethylene copolymer composition and the polyolefin to improve the properties of the overall composition. For the purposes of the present disclosure the term "impact-modifying compatibilizer" includes the styrene-ethylene-butylene-styrene (SEBS) rubber and the heterophasic polypropylene copolymer described above.

In the present description, the term "interpolymer" refers to a polymer prepared by the polymerization of at least two types of monomers or comonomers. It includes, but is not limited to, copolymers (which can refer to polymers prepared from two different types of monomers or comonomers, although it can be used interchangeably with "interpolymer" to refer to polymers made from three or more different types of monomers or comonomers), terpolymers (which can refer to polymers prepared from three different types of monomers or comonomers), tetrapolymers (which can refer to polymers prepared from four different types of monomers or comonomers), and the like.

In the present description, the terms "monomer" and "comonomer" are used interchangeably. The terms mean any compound with a polymerizable moiety that is added to a reactor in order to produce a polymer. In those instances in which a polymer is described as comprising one or more monomers, *e.g.*, a polymer comprising propylene and ethylene, the polymer comprises units derived from the monomers, *e.g.*, -$CH_2$-$CH_2$-, and not the monomer itself, *e.g.*, $CH_2$=$CH_2$.

In the present description, the term "polymer" means a macromolecular compound prepared by polymerizing monomers of the same or different type. The term "polymer" includes homopolymers, copolymers, terpolymers, interpolymers, and so on.

In the present description, the term "polymer composition" refers to a composition made from and/or containing at least one polymer.

In the present description, the term "polyolefin" as used herein includes polymers such as polyethylene, polypropylene, polybutene, and ethylene copolymers having at least 50 percent by weight of ethylene polymerized with a lesser amount of a comonomer such as vinyl acetate, and other polymeric resins within the "olefin" family classification.

Polyolefins may be made by a variety of processes including batch and continuous processes using single, staged or sequential reactors, slurry, solution, and fluidized bed processes and one or more catalysts including for example, heterogeneous and homogeneous systems and Ziegler-Natta, Phillips, metallocene, single-site, and constrained geometry catalysts to produce polymers having different combinations of properties. Such polymers may be highly branched or substantially linear and the branching, dispersity and average molecular weight may vary depending upon the parameters and processes chosen for their manufacture in accordance with the teachings of the polymer arts.

In the present description, the term "room temperature" refers to a temperature around 23 degrees Celsius (unless it is defined differently in an ASTM, in which case "room temperature" means as it is defined within that ASTM for that particular test/procedure/method).

In the present description, the term "thermoplastic polymer" means a polymer that softens when exposed to heat and returns to its original condition when cooled to room temperature.

In the present description, the terms "Ziegler-Natta-catalyzed polymer" and "Z-N-catalyzed polymer" mean any polymer that is made in the presence of a Ziegler-Natta catalyst.

In the present description, the term "crystalline" in reference to a polyolefin means olefinic polymer having a crystallinity of more than 70 weight percent and less than 93 weight percent, based upon the total weight of the olefinic polymer.

In the present description, the term "highly crystalline" in reference to a polyolefin means olefinic polymer having a crystallinity of greater than 93 weight percent, based upon the total weight of the olefinic polymer.

In the present description, the term "mold-in-color" refers to mixing and kneading a pigment, as a colorant, directly with a polymeric composition to provide a desired color to an article molded from the polymeric composition.

In the present description, the term "semi-amorphous" in reference to a polyolefin means olefinic polymer having a crystallinity of from 5 to 30 weight percent, based upon the total weight of the olefinic polymer.

In the present description, the term "semicrystalline" in reference to a polyolefin means olefinic polymer having a crystallinity of more than 30 weight percent and less than 70 weight percent, based upon the total weight of the olefinic polymer.

Melt mass flow rates (MFR) are given in gram/10 min and were measured using ASTMD1238, which is entitled "Test Method for Melt Flow Rates of Thermoplastics by Extrusi on Plastometer," under the conditions specified below. The term "ASTM D 1238" as used herein refers to a standard test method for determining melt flow rates of thermoplastics carried out by an extrusion plastometer. In general, this test method covers the determination of the rate of extrusion of molten thermoplastic resins using an extrusion plastometer. After a specified preheating time, resin is extruded through a die with a specified length and orifice diameter under prescribed conditions of temperature, load, and piston position in the barrel. This test method was approved on August 1, 2013 and published in August 2013, . For the referenced ASTM standards, visit the ASTM website, www.astm.org, or contact ASTM Customer Service at service@astm.org.

Filler content is given in percentage (%) and measured using ISO 3451-1, which is entitled "Plastics- Determination of Ash- Part 1: General Methods." The term "ISO 3451-1" as used herein refers to a standard test method for determination of the ash of a range of plastics (resins and compounds). The particular conditions chosen may be included in the specifications for the plastic material in question.

Density is giving in g/$cm^3$ and measured using ISO 1183-1, which is entitled "Plastics-Methods for Determining the Density of Non-Cellular Plastics- Part 1: Immersion method, liquid pycnometer method and titration method." The term "ISO 1183-1" as used herein refers to the test method published as the second edition dated May 15, 2012.

Flexural modulus (or "flex modulus") is given in megapascals (MPa) and measured using ISO 178, which is entitled "Plastics - Determination of flexural properties." The term "ISO 178" as used herein refers to the test method published as the fifth edition dated December 15, 2010.

ASTM D 256 is entitled "Standard Test Method(s) for Determining the Izod Pendulum Impact Resistance of Plastics." The term "ASTM D 256" as used herein refers to the pendulum impact test that indicates the energy to break standard test specimens of specified size under stipulated parameters of specimen mounting, notching, and pendulum velocity-at-impact. The test specimen is held as a vertical cantilevered beam and is impacted by a swinging pendulum. The energy lost by the pendulum is equated with the energy absorbed by the test specimen. For the Notched Izod Impact Strength, the specimen is held as a vertical cantilevered beam and is broken by a pendulum; the impact occurs on the notched side of the specimen. This test method was approved on May 1, 2010 and published June 2010, . For the referenced ASTM standards, visit the ASTM website, www.astm.org, or contact ASTM Customer Service at service@astm.org.

ASTM D 790 is entitled "Standard Test Methods for Flexural Properties of Unreinforced and Reinforced Plastics and Electrical Insulating Materials." The term "ASTM D 790" as used herein refers to the determination of flexural properties by these test methods for quality control and specification purposes. Materials that do not fail by the maximum strain allowed under these test methods (3-point bend) may be more suited to a 4-point bend test. The basic difference between the two test methods is in the location of the maximum bending moment and maximum axial fiber stresses. The maximum axial fiber stresses occur on a line under the loading nose in 3-point bending and over the area between the loading noses in 4-point bending. This test method was approved on Apr. 1, 2010 and published April 2010, . For the referenced ASTM standards, visit the ASTM website, www.astm.org, or contact ASTM Customer Service at service@astm.org.

ASTM D 792 is entitled "Test Methods for Density and Specific Gravity (Relative Density) of Plastics by Displacement." The term "ASTM D 792" as used herein refers to the standard test method for determining the specific gravity (relative density) and density of solid plastics in forms such as sheets, rods, tubes, or molded items. The test method includes determining the mass of a specimen of the solid plastic in air, determining the apparent mass of the specimen upon immersion in a liquid, and calculating the specimen's specific gravity (relative density). This test method was approved on Jun. 15, 2008 and published July 2008, . For the referenced ASTM standards, visit the ASTM website, www.astm.org, or contact ASTM Customer Service at service@astm.org.

ISO 180 is entitled "Determination of Izod Impact Strength." The term "ISO 180" as used herein refers to the test method for determining the Izod impact strength of plastics under defined conditions. A number of different types of specimen and test configurations are defined. Different test parameters are specified according to the type of material, the type of test specimen and the type of notch.

ISO 527 is entitled "Plastics--Determination of Tensile Properties." The term "ISO 527" as used herein refers to the test methods for determining the tensile properties of plastics and plastic composites under defined conditions. Several different types of test specimen are defined to suit different types of material. The methods are used to investigate the tensile behavior of the test specimens and for determining the tensile strength, tensile modulus and other aspects of the tensile stress/strain relationship under the conditions defined.

ISO 75 is entitled "Determination of Temperature of Deflection under Load." The term "ISO 75" as used herein refers to the test methods for the determination of the temperature of deflection under load (flexural stress under three-point loading) of plastics. Different types of test specimen and different constant loads are defined to suit different types of material. ISO 75-2 gives specific requirements for plastics (including filled plastics and fibre-reinforced plastics in which the fiber length, prior to processing, is up to 7.5 mm) and ebonite, while ISO 75-3 gives specific requirements for high-strength thermosetting laminates and long-fiber-reinforced plastics in which the fiber length is greater than 7.5 mm. The methods specified are for assessing the relative behavior of different types of material at elevated temperature under load at a specified rate of temperature increase. The results obtained do not necessarily represent maximum applicable temperatures because in practice essential factors, such as time, loading conditions and nominal surface stress, can differ from the test conditions. True comparability of data can be achieved for materials having the same room-temperature flexural modulus.

ISO 868 is entitled "Plastic and Ebonite - Determination of indentation hardness by means of a durometer (Shore hardness)." The term "ISO 868" as used herein refers to the test methods for the determination of the indentation hardness of plastics and ebonite by means of durometers of two types: Type A is used for softer materials and Type D for harder materials. In the methods described herein, a Type D durometer is used. The method permits measurement either of the initial indentation of the indentation after a specified period of time, or both.

ISO 294 is entitled" Plastics- Injection moulding of test specimens of thermoplastic materials. Part 4: Determination of moulding shrinkage." The term "ISO 294" herein refers to the test method for determining the moulding shrinkage and post-moulding shrinkage of injection-moulding test specimens of thermoplastic materials in the directions parallel to and normal to the direction of melt flow. LyondellBasell deviates slightly from the ISO 294 method whereas the method calls for a 60 mm x 60mm x 2 mm plate specimen to be measured using calipers, whereas LyondellBasell molds 4" x 6" x 3.2 mm plaques and tests shrinkage using a modified specimen holder.

ASTM D1525 Standard Test Method for Vicat Softening Temperature of Plastics: The term "ASTM D1525" as used herein refers to the standard test method for determining the temperature at which a specified needle penetration occurs when specimens are subjected to specified controlled test conditions. Data obtained by this test method is used to compare the heat-softening qualities of thermoplastic materials. This test method is useful in the areas of quality control, development, and characterization of plastics. This test method was approved on August 1st, 2017 and published September 2017, . For the referenced ASTM standards, visit the ASTM website, www.astm.org, or contact ASTM Customer Service at service@astm.org.

ASTM E 1356 - Glass Transition Temperature: The term "ASTM E1356-08" as used herein refers to the standard test method covering the assignment of the glass transition temperature of materials using differential scanning calorimetry or differential thermal analysis. This test method involves continuously monitoring the difference in heat flow into, or temperature between a reference materials and a test material when they are heated or cooled at a controlled rate through the glass transition region of the test material and analyzing the resultant thermal curve to provide the glass transition temperature.

ASTM D 638 Test Method for Tensile Properties of Plastics: The term "ASTM D 638" as used herein refers to the standard test method for determining the tensile properties of unreinforced and reinforced plastics in the form of standard dumbbell-shaped test specimens when tested under defined conditions of pretreatment, temperature, humidity, and testing machine speed. This test method is designed to produce tensile property data for the control and specification of plastic materials. Tensile properties may vary with specimen preparation and with speed and environment of testing. Consequently, where precise comparative results are desired, these factors must be carefully controlled. It is realized that a material cannot be tested without also testing the method of preparation of that material. Hence, when comparative tests of materials per se are desired, the greatest care must be exercised to ensure that all samples are prepared in exactly the same way, unless the test is to include the effects of sample preparation. Similarly, for referee purposes or comparisons within any given series of specimens, care must be taken to secure the maximum degree of uniformity in details of preparation, treatment, and handling. This test method was approved on May 15, 2010 and published June 2010, . For the referenced ASTM standards, visit the ASTM website, www.astm.org, or contact ASTM Customer Service at service@astm.org.

ASTM D 412 Test Methods for Vulcanized Rubber and Thermoplastic Elastomers- -Tension: The term "ASTM D 412" as used herein refers to the standard test method to evaluate the tensile (tension) properties of vulcanized thermoset rubbers and thermoplastic elastomers. The deters determination of tensile properties starts with test pieces taken from the sample material and includes the preparation of the specimens and the testing of the specimens. Specimens may be in the shape of dumbbells, rings or straight pieces of uniform cross-sectional area. Measurements for tensile stress, tensile stress at a given elongation, tensile strength, yield point, and ultimate elongation are made on specimens that have not been prestressed. Tensile stress, yield point, and tensile strength are based on the original cross-sectional area of a uniform cross-section of the specimen. Measurement of tensile set is made after a previously unstressed specimen has been extended and allowed to retract by a prescribed procedure. Measurement of "set after break" is also described. This test method was approved on Dec. 10, 2002 and published January 2003, . For the referenced ASTM standards, visit the ASTM website, www.astm.org, or contact ASTM Customer Service at service@astm.org.

The term "ASTM D 1003" as used herein refers to the standard test method for determining the haze and luminous transmittance of transparent plastics. In general, this test method covers the evaluation of specific light-transmitting and wide-angle-light-scattering properties of planar sections of materials such as essentially transparent plastic. Light that is scattered upon passing through a film or sheet of a material can produce a hazy or smoky field when objects are viewed through the material. Another effect can be veiling glare, as occurs in an automobile windshield when driving into the sun. According to this method, the haze measurements are made with either a hazemeter or a spectrophotometer. This test method was approved on Apr. 15, 2011 and published April 2011, . For the referenced ASTM standards, visit the ASTM website, www.astm.org, or contact ASTM Customer Service at service@astm.org.

Mar Resistance Determination for Automotive Coatings. The term "FLTM BI 161-01" as used herein refers to the standard test method for determining the mar resistance for automotive coatings and mold in color plastics. In general, this test method covers the evaluation of gloss retention of a TPO sample after abrasion with a polishing cloth. The test specimen will have the gloss measured at either 20 ° or 60 ° prior to abrasion. The surface will then be abraded with a polishing cloth using a crockmeter for 10 double-strokes. After abrasion the gloss is remeasured on the abraded surface and gloss retention is calculated.

ASTM D6556 Standard Test Method for Carbon Black-Total and External Surface Area by Nitrogen Adsorption: The term "ASTM 6556" used herein refers to the standard test method to determine the total surface area of carbon black by using Brunauer, Emmett, and Teller (B.E.T. NSA) theory of multilayer gas adsorption behavior using multipoint determinations and the external surface area based on the statistical thickness surface area method. The total and external surface area are measured by evaluating the amount of nitrogen adsorbed, at liquid nitrogen temperature, by a carbon black at several partial pressures of nitrogen. The adsorption data is used to calculate the NSA and STSA values

ASTM D3265 Standard Test Method for Carbon Black- Tinting Strength: The term "ASTM D3265" used herein covers the determination of the tint strength of carbon black relative to an industry tint reference (ITRB). A carbon black sample is mixed with a white powder and a liquid vehicle to produce a black or grey paste. This paste is spread to produce a surface suitable for measuring the reflectance of the mixture by means of a photo-electric reflectance meter. The reflectance of the tested sample is compared to the reflectance of the ITRB prepared in the same manner.

The fact that certain terms are defined, however, should not be considered as indicative that any term that is undefined is indefinite. Rather, all terms used are believed to describe the appended claims in terms such that one of ordinary skill can appreciate.

Provided herein are polyolefin-based compositions useful as components for automobiles, water vessels, locomotives, recreational vehicles, airplanes and other products, including, for example, injection molded parts. In some embodiments, these compositions (resins) allow for the preparation of molded-in-color parts (e.g., bumper covers, door claddings, rocker moldings, etc.)

The automotive industry uses many decorative parts for exterior styling and performance applications. The decorative parts may be made according to a molded-in-color process or may be molded to the desired shape followed by painting. In the molded-in-color process, the plastic is pigmented before molding to provide the aesthetic color. The molded-in-color method is the most cost-effective method to produce an article; however, the resulting article will have a lower gloss, and will have a "plastic" look which may be regarded as "cheap." Also, the molded-in-color process requires a texture on the surface to help prevent damage.

The second option is to paint the part to achieve the smooth, high gloss, richer "high end" look. The issues with painting are painting adds a second step to the manufacturing process, adds significant cost to the part, typically sacrifices impact performance, and creates environmental VOC concerns during the application process.

In various embodiments, the compositions and methods described herein provide an achievable level of color for Jet Black or Piano Black molded-in-color materials that are acceptable to auto manufactures.

In some embodiments, the compositions described herein may include: (1) a thermoplastic olefin (TPO) resin composition; (2) a compatibilizer composition; and/or (3) one or more pigments. The compositions may be described as molded in-color TPO compositions and may further include one or more additives.

In some embodiments, the composition contains the thermoplastic olefin resin composition in an amount ranging from 55 to 99.6 wt. %, based on the total weight of the composition. In some embodiments, the composition contains the thermoplastic olefin resin composition in an amount ranging from 60 to 99.6 wt. %; alternatively from 65 to 99.6 wt. %; alternatively from 70 to 99.6 wt. %; alternatively from 75 to 95 wt. %; alternatively from 75 to 90 wt. %; and alternatively from 75 to 85 wt. %, based on the total weight of the composition.

In some embodiments, the composition contains the compatibilizer composition in an amount ranging from 0.001 to 30 wt. %, based on the total weight of the composition. In some embodiments, the composition contains the compatibilizer composition in an amount ranging from 2 to 30 wt. %; alternatively from 5 to 30 wt. %; alternatively from 10 to 30 wt. %; alternatively from 15 to 30 wt. %; alternatively from 17 to 28 wt. %; alternatively from 17 to 25 wt. %; and alternatively from 20 to 30 wt. %, based on the total weight of the composition.

In some embodiments, the composition contains one or more pigments in an amount ranging from 0.4 to 1.5 wt. %, based on the total weight of the composition. In some embodiments, the composition contains one or more pigments in an amount ranging from 0.4 to 1.1 wt. %; and alternatively from 0.5 to 0.8 wt. %, based on the total weight of the composition.

In some embodiments, the composition may contain one or more additives. When additives are incorporated into the composition, the one or more additives may be present in an amount ranging from 0.001 to 10 wt. %, based on the total weight of the molded in-color TPO composition, or any amount or range therein.

Melt flow rate

In some embodiments, the molded in-color TPO composition has a melt flow rate (MFR, ASTM D1238, 230 °C, 2.16 kg) from 27 g/10 min to 34 g/10 min; alternatively from 28 g/10 min to 33 g/10 min; and alternatively from 29 g/10 min to 32 g/10 min. In specific embodiments, the molded in-color TPO composition has a melt flow rate (MFR, ASTM D1238, 230 °C, 2.16 kg) of 27, 28, 29, 30, 31, 32, 33 or 34 g/10 min.

Ash Content

In some embodiments, the molded in-color TPO composition has an ash content (ASTM D3451) from 0 to 3 wt. %; alternatively from 0.001 to 2.75 wt. %; alternatively from 0.01 to 2.5 wt. %; alternatively from 0.1 to 2.0 wt. %; alternatively from 0.001 to 1.75 wt. %; alternatively from 0.001 to 1.5 wt. %; alternatively from 0.001 to 1.0 wt. %; alternatively from 0.001 to 0.75 wt. %; alternatively from 0.001 to 0.5 wt. %; alternatively from 0.001 to 0.25 wt. %; alternatively from 0.001 to 0.1 wt. %; and alternatively from 0.001 to 0.01 wt. %. All wt. % values are based on the total weight of the molded in-color TPO composition.

Density

In some embodiments, the molded in-color TPO composition has a density (ISO 1183) from 0.88 g/cm$^3$ to 0.94 g/cm$^3$. In some of these embodiments, the composition has a density from 0.89 g/cm$^3$ to 0.91 g/cm$^3$. In specific embodiments, the composition has a density of 0.88 g/cm$^3$, 0.89 g/cm$^3$, 0.90 g/cm$^3$, 0.91 g/cm$^3$, 0.92 g/cm$^3$, 0.93 g/cm$^3$ or 0.94 g/cm$^3$.

Flexural Modulus

In some embodiments, the molded in-color TPO composition has a flexural modulus (ISO 178) from 600 to 1200 MPa; alternatively from 700 to 1100 MPa; alternatively from 750 to 1050 MPa; alternatively from 800 to 900 MPa; and alternatively from 840 to 890 MPa. In specific embodiments, the molded in-color TPO composition has a flexural modulus of 600, 625, 650, 675, 700, 725, 750, 775, 800, 825, 850, 860, 875, 900, 925, 950, 975, 1000, 1025, 1050, 1075, 1100, 1125, 1150, 1175, or 1200 MPa.

Notched Izod at 23°C

In some embodiments, the molded in-color TPO composition has a notched Izod at 23°C (ISO 180) from 20 to 50 kJ/m$^2$; alternatively from 25 to 45 kJ/m$^2$; alternatively from 30 to 43 kJ/m$^2$; and alternatively from 35 to 42 kJ/m$^2$. In specific embodiments, the molded in-color TPO composition has a notched Izod at 23°C of 20 kJ/m$^2$, 25 kJ/m$^2$, 28 kJ/m$^2$, 30 kJ/m$^2$, 31 kJ/m$^2$, 32 kJ/m$^2$, 33 kJ/m$^2$, 34 kJ/m$^2$, 35 kJ/m$^2$, 36 kJ/m$^2$, 37 kJ/m$^2$, 38 kJ/m$^2$, 39 kJ/m$^2$, 40 kJ/m$^2$, 41 kJ/m$^2$, 42 kJ/m$^2$, 43 kJ/m$^2$, 44 kJ/m$^2$, 45 kJ/m$^2$, 46 kJ/m$^2$, 47 kJ/m$^2$, 48 kJ/m$^2$, 49 kJ/m$^2$ or 50 kJ/m$^2$.

Notched Izod at 0°C

In some embodiments, the molded in-color TPO composition has a notched Izod at 0°C (ISO 180) from 4 to 20 kJ/m$^2$; alternatively from 6 to 18 kJ/m$^2$; alternatively from 8 to 16 kJ/m$^2$; and alternatively from 10 to 14 kJ/m$^2$. In specific embodiments, the molded in-color TPO composition has a notched Izod at 0°C of 4 kJ/m$^2$, 5 kJ/m$^2$, 6 kJ/m$^2$, 7 kJ/m$^2$, 8 kJ/m$^2$, 9 kJ/m$^2$, 10 kJ/m$^2$, 11 kJ/m$^2$, 12 kJ/m$^2$, 13 kJ/m$^2$, 14 kJ/m$^2$, 15 kJ/m$^2$, 16 kJ/m$^2$, 17 kJ/m$^2$, 18 kJ/m$^2$, 19 kJ/m$^2$, or 20 kJ/m$^2$.

Notched Izod at -40°C

In some embodiments, the molded in-color TPO composition has a notched Izod at -40°C (ISO 180) from 2 to 6 kJ/m$^2$; and alternatively from 3 to 5 kJ/m$^2$. In specific embodiments, the molded in-color TPO composition has a notched Izod at -40°C of 2 kJ/m$^2$, 3 kJ/m$^2$, 4 kJ/m$^2$, 5 kJ/m$^2$, or 6 kJ/m$^2$.

Tensile Yield Strength

In some embodiments, the molded in-color TPO composition has a tensile yield strength (ISO 527-1,2) from 16 to 26 MPa; alternatively from 18 to 25 MPa; alternatively from 19 to 24 MPa; and alternatively from 20 to 23 MPa. In specific embodiments, the molded in-color TPO composition has a tensile yield strength (ISO 527-1,2) of 16 MPa, 17 MPa, 18 MPa, 19 MPa, 20 MPa, 21 MPa, 22 MPa, 23 MPa, 24 MPa, 25 MPa or 26 MPa.

Hardness, Shore D

In some embodiments, the molded in-color TPO composition has a hardness, shore D (ASTM D2240) from 55 to 65; alternatively from 57 to 63; and alternatively from 59 to 61. In specific embodiments, the molded in-color TPO composition has a hardness, shore D of 55, 56, 57, 58, 59, 60, 61, 62, 63, 64 or 65.

Tool Shrinkage [Modified version of ISO 294]

In some embodiments, the molded in-color TPO composition has a tool shrinkage (ISO 294-4) of 8% to 14 %; and alternatively from 10% to 12%. In specific embodiments, the molded in-color TPO composition has a tool shrinkage of 8%, 9 %, 10%, 11%, 12%, 13 % or 14%.

HDT at 1.8 MPa

In some embodiments, the molded in-color TPO composition has a HDT at 1.8 MPa (ISO 75) from 46 °C to 56 °C; alternatively from 48 °C to 54 °C; and alternatively from 50 °C to 54 °C. In specific embodiments, the molded in-color TPO composition has a HDT at 1.8 MPa of 46 °C, 47 °C, 48 °C, 49 °C, 50 °C, 51 °C, 52 °C, 53 °C, 54 °C, 55 °C or 56 °C.

Gloss 60°

In some embodiments, the molded in-color TPO composition has a Gloss at 60° (ASTM D2457) from 76 to 90 Gloss Units alternatively from 80 to 90 GU; alternatively from 83 to 90 GU; and alternatively from 85 to 90 GU. In specific embodiments, the molded in-color TPO composition has a Gloss at 60° of 76 GU, 78 GU, 80 GU, 82 GU, 84 GU, 86 GU, 88 GU, or 90 GU.

Mar Resistance, % Gloss Retention 20°

In some embodiments, the molded in-color TPO composition has a gloss retention at 20 ° (FLTM BI 161-01) from 63% to 78%. Units alternatively from 65% to 78%, alternatively from 70% to 78%, alternatively from 75% to 78%. In specific embodiments, the molded in-color TPO composition has a gloss retention of 65%, 66%, 67%, 68%, 69%, 70%, 71%, 72%, 73%, 74%, 75%, 76%, 77%, or 78%.

Mar Resistance, % Gloss Retention 60°

In some embodiments, the molded in-color TPO composition has a gloss retention at 60 ° (FLTM BI 161-01) from 80% to 95%. Units alternatively from 82% to 93%, alternatively from 85% to 93%, alternatively from 89% to 93%. In specific embodiments, the molded in-color TPO composition has a gloss retention of 80%, 81%, 82%, 83%, 84%, 85%, 86%, 87%, 88%, 89%, 90%, 91%, 92%, or 93%.

The molded in-color TPO composition's color data is measured using a X-Rite Ci7800 Spectrophotometer (S/N 001570). Values for the following parameters were measured $L^*$, $a^*$, $b^*$ and $E^*$.

Color $L^*$

The standard used to calculate the $L^*$ value has a $L^*$ value of 24.85. The molded in-color TPO composition has $L^*$ value from 23.85 to 24.85 or any value or range found between the endpoints of 23.85 and 24.85. In some embodiments, the molded in-color TPO composition has a $\Delta L^*$ value within -1.0 to 0 of the $L^*$ value for the standard. In some embodiments, the molded in-color TPO composition has a $\Delta L^*$ value within -1.0 to -0.25 of the $L^*$ value for the standard.

Color $a^*$

The standard used to calculate the $a^*$ value has an $a^*$ value of -0.09. The molded in-color TPO composition has a $a^*$ value from -0.39 to 0.29 or any value or range found between the endpoints of -0.38 and 0.29. In some embodiments, the molded in-color TPO composition has a $\Delta a^*$ value within $\pm$ 0.3 of the $a^*$ value for the standard.

Color $b^*$

The standard used to calculate the $b^*$ value has a $b^*$ value of -0.74. The molded in-color TPO composition has a $b^*$ value from -1.04 to -0.44 or any value or range found between the endpoints of -1.04 and -0.44. In some embodiments, the molded in-color TPO composition has a $\Delta b^*$ value within $\pm$ 0.3 of the $b^*$ value for the standard.

Color $\Delta E^*$

The value $\Delta E^*$ is the total color difference between the standard and the sample. In some embodiments, the molded in-color TPO composition has a $\Delta E^*$ value $\leq$ 1.0.

Thermoplastic Olefin Resin Composition

In some embodiments, the molded in-color TPO composition includes a thermoplastic olefin resin composition. The thermoplastic olefin resin composition may include two different polypropylene homopolymers. The difference in the two polypropylene homopolymers may be found in at least the melt flow rate (measured at 230 °C with a 2.16 kg load) of the two polypropylene homopolymers. For example, a first polypropylene homopolymer may be characterized as having a high melt flow rate while the second polypropylene homopolymer may be characterized as having a low melt flow rate. The term "high melt flow rate polypropylene" is defined herein as a polypropylene homopolymer having a melt flow rate ranging from 50 to 200 g/10 min (2.16 kg at 230°C). The term "low melt flow rate polypropylene" is defined herein as a polypropylene homopolymer having a melt flow rate ranging from 1 to 5 g/10 min (2.16 kg at 230°C).

High Melt Flow Rate Polypropylene Homopolymer

The high melt flow rate polypropylene homopolymer composition is made from and/or contains a highly crystalline polypropylene homopolymer having a melt flow rate (ASTM D 1238; 230 °C/ 2.16 kg) from 50 to 200 grams/10 minutes; alternatively from 60 to 150 grams/10 minutes; and alternatively from 60 to 100 grams/10 minutes. The highly crystalline polypropylene homopolymer has a polydispersity index from 2 to 40; alternatively from 2 to 20; alternatively from 2 to 7.5. The highly crystalline high melt flow rate polypropylene homopolymer may have one or more of the following properties: a density (ASTM D 792) from 0.900 to 0.950 gram/cm$^3$; a xylene solubles fraction at room temperature from 0.001 to 3 weight percent; a flexural modulus (ASTM D 790) (1.3 mm/min, 1 % secant, Procedure A) from 1500 to 2500 MPa; a tensile strength at yield (ASTM D 638) (50 mm/min) from 25 to 65 MPa; a tensile elongation at yield (ASTM D 638) from 3 to 10%; and/or a notched Izod impact strength (ASTM D 256) (23°C, Method A) from 10 to 25 J/m.

In some embodiments, the molded in-color TPO composition includes the high melt flow rate polypropylene homopolymer in an amount ranging from 50 to 90 wt. %, based on the total weight of the molded in-color TPO composition. In some embodiments, the molded in-color TPO composition includes the high melt flow rate polypropylene homopolymer in an amount ranging from 55 to 85 wt. %; alternatively from 60 to 80 wt. %; and alternatively from 65 to 73 wt. %, based on the total weight of the molded in-color TPO composition.

In some embodiments, the thermoplastic olefin resin composition includes the high melt flow rate polypropylene homopolymer in an amount ranging from 55 to 100 wt. %, based on the total weight of the thermoplastic olefin resin composition. In some embodiments, the thermoplastic olefin resin composition includes the high melt flow rate polypropylene homopolymer in an amount ranging from 60 to 90 wt. %; alternatively from 65 to 90 wt. %; alternatively from 70 to 90 wt. %; alternatively from 75 to 90 wt. %; and alternatively from 80 to 90 wt. %, based on the total weight of the thermoplastic olefin resin composition.

Low Melt Flow Rate Polypropylene Homopolymer

The thermoplastic olefin resin composition may include a second highly crystalline polypropylene homopolymer having a low melt flow rate. The low melt flow rate polypropylene homopolymer may have a melt flow rate (ASTM D 1238, 230°C/2.16 kg) from 1 to 5 grams/10 minutes; and alternatively from 1 to 3 grams/10 minutes. The highly crystalline low melt flow rate polypropylene homopolymer may have one or more of the following properties: a polydispersity index from 2 to 7.5; a density (ASTM D 792) from 0.900 to 0.950 gram/cm$^3$, a xylene solubles fraction at room temperature from 0.001 to 2.5 weight percent; a flexural modulus (ASTM D 790) (1.3 mm/min, 1 % secant, Procedure A) from 1500 to 2400 MPa; a tensile strength at yield (ASTM D 638) (50 mm/min) from 25 to 45 MPa; a tensile elongation at yield (ASTM D 638) from 3 to 10%; and a notched Izod impact strength (ASTM D 256) (23°C, Method A) from 30 to 65 J/m.

When a second polypropylene homopolymer is present, the difference between the melt flow rate of the first highly crystalline polypropylene homopolymer (MFR1) and the melt flow rate of the second polypropylene homopolymer (MFR2) is at least 40 grams/10 minutes:

$$|MFR1 - MFR2| \geqq 40.$$

In some embodiments, the molded in-color TPO composition includes the low melt flow rate polypropylene homopolymer in an amount ranging from 0 to 20 wt. %, based on the total weight of the molded in-color TPO composition. In some embodiments, the molded in-color TPO composition includes the low melt flow rate polypropylene homopolymer in an amount ranging from 1 to 15 wt. %; alternatively from 1 to 10 wt. %; and alternatively from 3 to 8 wt. %, based on the total weight of the molded in-color TPO composition.

In some embodiments, the thermoplastic olefin resin composition includes the low melt flow rate polypropylene homopolymer in an amount ranging from 0 to 25 wt. %, based on the total weight of the thermoplastic olefin resin composition. In some embodiments, the thermoplastic olefin resin composition includes the low melt flow rate polypropylene homopolymer in an amount ranging from 0.1 to 15 wt. %; alternatively from 1 to 10 wt. %; alternatively from 2 to 8 wt. %; alternatively from 3 to 7 wt. %; and alternatively from 5 to 10 wt. %, based on the total weight of the thermoplastic olefin resin composition.

Elastomer

In some embodiments, the thermoplastic olefin resin composition may include an elastomer. The elastomer may be an ethylene - alpha-olefin copolymer or a polyethylene elastomer. In some embodiments, the polyethylene elastomer of the polyethylene elastomer composition, has a density (ASTM D 792) from 0.850 to 0.880 g/cm$^3$. In some embodiments, the polyethylene elastomer of the polyethylene elastomer composition, is an ethylene copolymer comprising (a) ethylene-derived units and (b) alpha-olefin comonomer units derived from at least one comonomer selected from the group consisting of $C_3$ to $C_{10}$ alpha-olefins. In specific embodiments, the polyethylene elastomer comprises ethylene and propylene derived units.

In some embodiments, the polyethylene elastomer may have one or more of the following properties: a melt flow rate ranging from 1 to 5 g/10 min (ASTM D 1238) (2.16 kg at 230°C); a tensile strength at break (ASTM D 638) ranging from 8 to 20 MPa; and elongation at break (ASTM D 638) ranging from 300 to 900%; a shore A hardness (ASTM D 2240) ranging from 60 to 80; a Shore D Hardness (ASTM D 2240) ranging from 15 to 30; a glass transition temperature (ASTM E 1356) ranging from -40 to -20°C; a Vicat temperature (ASTM D 1525) from 15 to 25°C; and/or a haze (ASTM D 1003) from 3 to 8%.

In some embodiments, the molded in-color TPO composition includes the polyethylene elastomer in an amount ranging from 0 to 25 wt. %, based on the total weight of the molded in-color TPO composition. In some embodiments, the molded in-color TPO composition includes the polyethylene elastomer in an amount ranging from 0.1 to 15 wt. %; alternatively from 1 to 10 wt. %; and alternatively from 3 to 8 wt. %, based on the total weight of the molded in-color TPO composition.

In some embodiments, the thermoplastic olefin resin composition includes polyethylene elastomer in an amount ranging from 0 to 25 wt. %, based on the total weight of the thermoplastic olefin resin composition. In some embodiments, the thermoplastic olefin resin composition includes the polyethylene elastomer in an amount ranging from 0.1 to 15 wt. %; alternatively from 1 to 10 wt. %; alternatively from 2 to 8 wt. %; alternatively from 3 to 7 wt. %; and alternatively from 5 to 10 wt. %, based on the total weight of the thermoplastic olefin resin composition.

Compatibilizer Composition

In some embodiments, the molded in-color TPO composition includes a compatibilizer composition. In some embodiments, the compatibilizer composition comprises at least one styrene-based block copolymer. The styrene-based block copolymer is selected from the group consisting of styrene-isobutylene-styrene block copolymer (SIBS); styrene-butadienestyrene block copolymer (SBS); styrene-ethylene-butylene-styrene block copolymer (SEBS); styrene-isoprene-styrene block copolymer (SIS); styrene-ethylene-propylene-styrene block copolymer (SEPS); styrene-ethylene-ethylene-propylene-styrene block copolymer (SEEPS structure); and modified block copolymers thereof.

In some embodiments, the compatibilizer composition contains at least a first styrene-based block copolymer and a second styrene-based block copolymer. In some embodiments, the compatibilizer composition incudes from 0.01 to 99.99 wt. % of a first styrene-based block copolymer and 0.01 to 99.99 wt. % of a second styrene-based block copolymer, based on the total weight of the compatibilizer composition. In some embodiments, the compatibilizer composition includes from 20 to 80 wt. % of a first styrene-based block copolymer and 20 to 80 wt. % of a second styrene-based block copolymer; alternatively from 30 to 70 wt. % of a first styrene-based block copolymer and 30 to 70 wt. % of a second styrene-based block copolymer; alternatively from 40 to 60 wt. % of a first styrene-based block copolymer and 40 to 60 wt. % of a second styrene-based block copolymer; and alternatively from 45 to 55 wt. % of a first styrene-based block copolymer and 45 to 55 wt. % of a second styrene-based block copolymer, based on the total weight of the compatibilizer composition.

In some embodiments, the molded in-color TPO composition incudes from 0 to 25 wt. % of a first styrene-based block copolymer, based on the total weight of the molded in-color TPO composition. In some embodiments, the molded in-color TPO composition incudes from 0.1 to 20 wt. % of a first styrene-based block copolymer; alternatively from 7 to 18 wt. %; and alternatively 9 to 14 wt. %, based on the total weight of the molded in-color TPO composition.

In some embodiments, the molded in-color TPO composition incudes from 0 to 25 wt. % of a second styrene-based block copolymer, based on the total weight of the molded in-color TPO composition. In some embodiments, the molded in-color TPO composition incudes from 0.1 to 20 wt. % of a second styrene-based block copolymer; alternatively from 1 to 15 wt. %; and alternatively 5 to 14 wt. %, based on the total weight of the molded in-color TPO composition.

In some embodiments, the first styrene-based block copolymer may be a clear, linear triblock styrene-ethylene butylene-styrene block copolymer (S-EB-S) comprising two styrene blocks and one diblock (EB) as the middle block of the triblock copolymer. The first styrene ethylene butylene styrene linear triblock copolymer maybe characterized as an elastomer or may exhibit characteristics that are elastomeric in nature. In some embodiments, the first SEBS polymer may have one or more of the following properties: a polystyrene content of ranging from 5 to 17 %; a diblock (EB) content from 25 to 45%; a styrene/rubber ratio from 5/95 to 20/80; a melt flow rate (ASTM D 1238) from 2 to 11 g/10 min (2.16 kg at 230°C); a tensile stress at 300% (ASTM D 412) from 1 to 5 MPa; a tensile strength at yield (ASTM D 412) from 15 to 30 MPa; an elongation at yield (ASTM D 412) from 650 to 825%; and/or a shore A hardness from 40 to 50 (ASTM D 2240).

In some embodiments, the second styrene-based block copolymer may be a clear, linear triblock styrene-ethylene butylene-styrene block copolymer (S-EB-S) comprising two styrene blocks and one diblock (EB) as the middle block of the triblock copolymer. The second styrene ethylene butylene styrene linear triblock copolymer maybe characterized as an elastomer or may exhibit characteristics that are elastomeric in nature. In some embodiments, the second SEBS polymer may have one or more of the following properties: a polystyrene content from 15 to 25%; a melt flow rate (ASTM D 1238) from 14 to 25 g/10 min (2.16 kg at 230°C); a shore A hardness from 45 to 55 (ASTM D 2240); a tensile strength from 5 to 15 MPa (ASTM D 412); an elongation at break of greater than 600% (ASTM D 412); and/or a styrene/rubber ratio from 15/85 to 25/75.

The individually-described polyolefins may be prepared by conventional polymerization processes which would be apparent to a person of ordinary skill in the art. Exemplary patents describing such processes include U.S. Pat. No. 8,008,400, U.S. Pat. No. 8,039,540, and U.S. Pat. No. 8,227,550.

Alternatively, suitable individual polymers are commercially available through readily identifiable suppliers.

Pigments

In some embodiments, the molded in-color TPO composition may contain 0.4 to 0.6 wt. %, of carbon black based on the total weight of the molded in-color TPO composition.

In some embodiments, the molded in-color TPO composition may contain 0 to 0.1 wt. %, of a green pigment, based on the total weight of the molded in-color TPO composition.

In some embodiments, the molded in-color TPO composition may contain 0 to 0.5 wt. %, of a Pan Technology pigment, based on the total weight of the molded in-color TPO composition.

In some embodiments, the molded in-color TPO composition may contain 0 to 0.5 wt. %, of at least one pigment, based on the total weight of the molded in-color TPO composition.

In some embodiments, the first pigment is a low-structure surface oxidized "treated" carbon black powder. In some embodiments, the first pigment may have one or more of the following properties: a NSA surface area of 583 $m^2/g$ (ASTM D6556); and a tinting strength of 135 (ASTM D3265). In some embodiments, the first pigment may have a NSA surface area ranging from 500 to 1,200 $m^2/g$ (ASTM D 6556), or any value and/or range found within. In specific embodiments, the first pigment may have a NSA surface area ranging from 500 to 800 $m^2/g$, or any value and/or range found within. In alternative embodiments, the first pigment may have a NSA surface area ranging from 500 to 750 $m^2/g$ (ASTM d 6556), or any value and/or range found within. In some embodiments, the first pigment may have a tinting strength ranging from 100 to 200, or any value and/or range found within. In some embodiments, the first pigment may have a tinting strength ranging from 100 to 175, or any value and/or range found within.

In some embodiments, the second pigment is a phthalo based organic green pigment. This pigment is a dry powder that has a surface area (BET) of 60 $m^2/g$ and a density of 2.24 g/cc.

In some embodiments, the third pigment is a of 28% "black pigment 7" in a thermoplastic polymer carrier, having a specific gravity of 1.22. In some embodiments, the Pan Technology pigment is a pigment sold under the commercial name PanTINT X19-424K which is a jet black TPO chip dispersion pigment.

Additives

In some embodiments, the molded composition includes one or more additives. Exemplary additives include colorants, odorants, deodorants, plasticizers, impact modifiers, nucleating agents, lubricants, surfactants, wetting agents, flame retardants, ultraviolet light stabilizers, antioxidants, biocides, metal deactivating agents, thickening agents, heat stabilizers, defoaming agents, coupling agents, polymer alloy compatibilizing agent, blowing agents, emulsifiers, crosslinking agents, waxes, particulates, flow promoters, scratch reduction additives, neutralizers/acid scavengers, and other materials added to enhance processability or end-use properties of the polymeric components. Such additives can be used in conventional amounts. In some embodiments, the amounts do not exceed 10 weight percent of the total composition. More specifically, the additives may be present individually or collectively in an amount ranging from 0.001 to 10 wt. %, based on the total weight of the molded in-color TPO composition, or any range therein.

In some embodiments, the scratch reduction additive may include lubricants such as fatty amides; examples of which include oleamide ("OR"), ethylene bis-steramide (EBS), and/or erucamide, and the like. For example, the oleamide (OR) may be Crodamide® OR supplied by Croda; the erucamide (ER) may be Crodamide® ER supplied by Croda; and the ethylene bis-steramide (EBS) may be Crodamide® EBS supplied by Croda.

In some embodiments, the additive package comprises a neutralizer/acid scavenger, wherein the neutralizer/acid scavenger is magnesium aluminum hydroxy carbonate or hydrates thereof. Magnesium aluminum hydroxy carbonate hydrates are effective in retarding hindered amine light stabilizer deactivation. One magnesium aluminum hydroxy carbonate hydrate for use with the present disclosure is sold under the trademark "DHT-4A or DHT-4V" by Kyowa Chemical Industry Co. Ltd.

In some embodiments, the additive package further comprises one or more of the following type of substances: colorants, odorants, deodorants, plasticizers, impact modifiers, surfactants, wetting agents, flame retardants, ultraviolet light stabilizers, antioxidants, biocides, metal deactivating agents, thickening agents, heat stabilizers, defoaming agents, coupling agents, polymer alloy compatibilizing agents, blowing agents, emulsifiers, crosslinking agents, waxes, particulates, flow promoters, and other materials added to enhance processability or end-use properties of the polymeric components. Such additives may be used in conventional amounts. In some embodiments, the amounts do not exceed 10 weight percent (wt. %) of the total weight of the composition.

In some embodiments, the molded in-color TPO composition is used to form a molded article. In some embodiments, the molded in-color article is an automotive part selected from the group consisting of bumper facias, body side-molding, instrumental panels, side pillars, and door trims.

In some embodiments, the automotive part is paintable.

In some embodiments, the automotive part comprises the polymeric composition comprising an additive composition, wherein the additive composition comprises a colorant and the automotive part has a mold-in-color.

EXAMPLES

The following examples are included to demonstrate preferred embodiments of the invention. It should be appreciated by those of skill in the art that the techniques disclosed in the examples which follow represent techniques discovered by the inventor to function well in the practice of the invention, and thus can be considered to constitute preferred modes for its practice.

In addition to the test methods described above, the test method for measuring gloss and the test method for generating the color data is provided below.

Gloss Meter

Gloss is measured using BYK Gardner micro-TRI-gloss meter (S/N 9119536). Prior to collecting sample gloss data, the gloss meter is calibrated using the provided black standard sample. The gloss meter is calibrated at a 20°, 60°, and 85° geometry. After calibration the plaque to be analyzed is gently wiped clean to remove any smudges, dust, or fingerprint marks and then placed on a level surface. The gloss meter is placed on top of the plaque and is set to measure at

60° geometry. The plaque is measured for gloss at several different locations (typically 3-4 locations, alternating with mold-flow/ against mold-flow). Gloss measurements are averaged and the final average is reported.

Color Spectrometer

Color data is measured using X-Rite Ci7800 Spectrophotometer (S/N 001570). The spectrophotometer is calibrated using provided white tile standard and a black trap standard. After calibration a color reading on a green standard is measured to validate the calibration.

Prior to measuring the sample, the color standard needs to be read in order to calculate ΔL, Δa, Δb, and ΔE. The color standard is positioned on the front of the spectrophotometer and clamped into place, ensuring no auxiliary light enters the spectrophotometer and skews the reading. The color standard is read and data is collected on: L (lightness); a (green/red); and, b (blue/yellow).

The sample is then measured in the above fashion. The sample is measured at 3-5 different locations and values averaged. The sample color data is compared to the color standard and values of ΔL, Δa, Δb, and ΔE are calculated.

Materials

The Examples below were prepared using a base formulation that includes: (1) a thermoplastic olefin resin composition (Polyolefin A, Polyolefin B and Elastomer); (2) a compatibilizer composition (Styrene Ethylene Butylene Styrene Elastomer A and Styrene Ethylene Butylene Styrene Elastomer B); (3) an additive package (an antioxidant, a light stabilizer, an anti-scratch agent, and an acid scavenger); and (4) a pigment package.

Polyolefin A is a high crystalline polypropylene homopolymer with a melt flow rate of 65 g/ 10 min (2.16 kg at 230°C). Polyolefin A (for example, Adstif HA801U) is a high melt flow, nucleated polypropylene homopolymer having a melt flow rate of 65 g/ 10 min (2.16 kg at 230°C), a density (23°C) of 0.9 g/cm$^3$, a flexural modulus (1.3 mm/min, 1 % secant, Procedure A) of 2000 MPa, a tensile strength at yield (50 mm/min) of 42 MPa, tensile elongation at yield of 6%, notched Izod impact strength (23°C, Method A) of 16 J/m.

Polyolefin B is a high crystalline polypropylene homopolymer with a melt flow rate of 2.5 g/ 10 min (2.16 kg at 230°C). Polyolefin B (for example, Adstif HA802H) is a low melt flow, homopolymer of polypropylene having a melt flow rate of 2.5 g/ 10 min (2.16 kg at 230°C), a density (23°C) of 0.9 g/cm$^3$, a flexural modulus (1.3 mm/min, 1 % secant, Procedure A) of 1900 MPa, a tensile strength at yield (50 mm/min) of 37 MPa, tensile elongation at yield of 8%, notched Izod impact strength (23°C, Method A) of 53 J/m.

Polyethylene elastomer is a polyethylene - olefin copolymer with a melt flow rate of 2 g/10 min (2.16 kg at 230°C). The polyethylene elastomer (for example, DOW Versify 2400) is an ethylene propylene copolymer having a specific gravity of 0.863 g/cm$^3$, a melt flow rate of 2 g/10 min (2.16 kg at 230°C), a tensile strength at break of 16.2 MPa, Elongation at Break of 710 %, a shore A hardness of 75, a Shore D Hardness of 22, a glass transition temperature of -30°C, a Vicat temperature of 20°C, and a Haze of 5.3%.

Styrene Ethylene Butylene Styrene Elastomer A is a clear, linear triblock copolymer based on styrene and ethylene/butylene. The SEBS elastomer A (for example, Kraton G-1657) has a polystyrene content of 13%, a diblock content of 30 to 35%, a styrene/rubber ratio of 13/87, a melt flow rate of 7 g/10 min (2.16 kg at 230°C), a tensile stress at 300% of 2.41 MPa, tensile strength at yield of 23.4 MPa, elongation at yield of 750%, shore A hardness 47 (ASTM D 2240).

Styrene Ethylene Butylene Styrene Elastomer B is a clear, linear triblock copolymer based on styrene and ethylene/butylene with a polystyrene content of 20% and a melt flow rate of 18 g/10 min (2.16 kg at 230°C). The SEBS Elastomer B (for example, Kraton G 1643) has a poly styrene content of 20%, a melt flow rate of 14 - 25 g/10 min (2.16 kg at 230°C), a shore A hardness of 52 (ASTM D 2240), a tensile strength of 10.3 MPa (ASTM D 412), an elongation at break of greater than 600% (ASTM D 412), and a styrene/rubber ratio of 20/80.

In the examples below, the antioxidant used is Irganox B-225. In the examples, below the light stabilizer used is CYASORB UV-3853. The anti-scratch used is cis-13-docosenamide or erucamide. The acid scavenger used is magnesium aluminum hydroxide carbonate (hydrate).

Pigments used in the Examples below include Raven® 5000 Carbon Black supplied by Birla Carbon, Sunfast® Green #7 264-8735 Pigment supplied by Sun Chemical, Sunfast® Blue Pigment supplied by Sun Chemical, Jet Black PE Chip X19-453K supplied by Pan Technology, PE-550 supplied by Modern Dispersions, Inc., and PE-9025 supplied by Modern Dispersions, Inc.

The molded in-color TPO composition used in the Examples below has the same: (1) thermoplastic olefin resin composition (Polyolefin A, Polyolefin B and Elastomer); (2) compatibilizer composition (Styrene Ethylene Butylene Styrene Elastomer A and Styrene Ethylene Butylene Styrene Elastomer B); and (3) an additive package. However, the pigments used in the pigment package were varied.

The formulation and test results are summarized in Table 1.

| Table 1: Formulations and Test Results for Examples 1-6 | | | | | | |
|---|---|---|---|---|---|---|
| | Ex. 1 | Ex. 2 | Ex. 3 | Ex. 4 | Ex. 5 | Ex. 6 |
| Polyolefin A (high crystalline PP homopolymer) | 68.565 | 68.215 | 66.586 | 67.433 | 68.70 | 68.61 |
| Polyolefin B (high crystalline PP homopolymer) | 5 | 5 | 5 | 5 | 5 | 5 |
| Elastomer (C2-Cx copolymer) | 6 | 6 | 6 | 6 | 6 | 6 |
| Styrene Ethylene Butylene Styrene elastomer A | 11 | 11 | 11 | 11 | 11 | 11 |
| Styrene Ethylene Butylene Styrene elastomer B | 8 | 8 | 8 | 8 | 8 | 8 |
| Antioxidant | 0.2 | 0.2 | 0.2 | 0.2 | 0.2 | 0.2 |
| Light Stabilizer | 0.3 | 0.3 | 0.3 | 0.3 | 0.3 | 0.3 |
| Anti-Scratch | 0.4 | 0.4 | 0.4 | 0.4 | 0.4 | 0.4 |
| Acid Scavenger | 0.05 | 0.05 | 0.05 | 0.05 | 0.05 | 0.05 |
| Raven® 5000 Carbon Black | 0.44 | 0.44 | 1.1 | 0.185 | - | - |
| Sunfast® Green Pigment #7 | 0.045 | 0.045 | 0.154 | 0.2 | - | 0.045 |
| Jet Black TPO X19-424K | - | 0.35 | - | - | 0.35 | 0.35 |
| PE-550 | - | - | 1.1 | - | - | - |

(continued)

| Table 1: Formulations and Test Results for Examples 1-6 | | | | | | |
|---|---|---|---|---|---|---|
| | Ex. 1 | Ex. 2 | Ex. 3 | Ex. 4 | Ex. 5 | Ex. 6 |
| PE-9025 | - | - | - | 1.1 | - | - |
| Sunfast® Blue Pigment #16 | - | - | 0.11 | 0.132 | - | 0.045 |
| Color Test | Success | Success | Failure | Failure | Failure | Failure |

The reasons for failure are provided in Table 2.

| Table 2: Reasons for Success/Failure | |
|---|---|
| | Reasons for Success/Failure |
| Ex. 1 | Success - Sample shows numerical value typically recognized as a DL value being darker than that of the desired target in question (UAWAWHA Ford Master) and the value of the Hues (Da, Db) being in the perimeters of the claimed values. (±0.3) |
| Ex. 2 | Success - Sample shows numerical value typically recognized as a DL value being darker than that of the desired target in question (UAWAWHA Ford Master) and within the parameters of the claimed values. |
| Ex. 3 | Failure - Sample color washed and lacks desired jet of color. Sample is visually and numerically off from designated target. |
| Ex. 4 | Failure - Sample color washed, has poor dispersion and lacks desired jet of color. Sample is visually and numerically off from designated target. |
| Ex. 5 | Failure - Sample color better but slightly washed, and sample has poor but better dispersion. Sample is visually and numerically off from designated target. |
| Ex. 6 | Failure - Sample color better but slightly washed, and sample has poor but better dispersion. Sample is visually and numerically off from designated target. |

The physical properties of Ex. 1 are provided in Table 3.

| Property | Standard | Units | Ex. 1 |
|---|---|---|---|
| Melt Flow Rate (2.16 kg at 230°C) | ASTM D1238 | g/10 min | 30 |
| Ash Content | ASTM D3651 | % | 0 |
| Density | ISO 1183 | $g/cm^3$ | 0.9 |
| Flexural Modulus | ISO 178 | MPa | 860 |
| Notched Izod at 23°C | ISO 180 | $kJ/m^2$ | 41.8 |
| Notched Izod at 0°C | ISO 180 | $kJ/m^2$ | 11.7 |
| Notched Izod at -40°C | ISO 180 | $kJ/m^2$ | 4.76 |
| Tensile Yield Strength | ISO 527-1,2 | MPa | 22.3 |
| Hardness, Shore D | ASTM D2240 | None | 61 |
| Tool Shrinkage | Modified version of ISO 294-4 | % | 11.5 |
| HDT at 1.8MPa | ISO 75 | °C | 53.4 |
| Gloss 60° | Gloss Meter | GU | 86 |
| Gloss Retention, 60° | FLTM BI 161-01 | % | 90 |
| Gloss Retention, 20° | FLTM BI 161-01 | % | 76 |

(continued)

| Property | Standard | Units | Ex. 1 |
|---|---|---|---|
| Color (L*) | Color Spectrometer | Lightness | 24.20 |
| Color (a*) | Color Spectrometer | Red/green coordinates | -0.07 |
| Color (b*) | Color Spectrometer | Blue/yellow coordinates | -0.74 |

Color properties with respected to Piano Black Painted plaque in Table 4

| Property | Standard | Master (UAWAWHA) | Ex. 1 Success #1 | Ex. 2 Success #2 | Ex. 3 Failure #1 | Ex. 4 Failure #2 | Ex. 5 Failure #3 | Ex. 6 Failure #4 |
|---|---|---|---|---|---|---|---|---|
| Color L* (ΔL*) | Color Spectrometer | 24.85 | 24.20 (-0.65 ΔL) | 24.37 (-0.48 ΔL) | 24.97 (0.12 ΔL) | 24.66 (-0.19 ΔL) | 25.37 (0.52 ΔL) | 25.60 (0.75 ΔL)) |
| Color a* (Δa*) | Color Spectrometer | -0.09 | -0.07 (0.02 Δa) | -0.05 (0.04 Δa) | 0.07 (0.16 Δa) | -0.08 (0.01 Δa) | -0.07 (0.02 Δa) | -0.56 (-0.47 Δa) |
| Color b* (Δb*) | Color Spectrometer | -0.74 | -0.74 (0.00 Δb) | -0.54 (0.20 Δb) | -0.39 (-0.35 Δb) | -0.76 (-0.02 Δb) | -0.43 (0.31 Δb) | -1.37 (-0.63 Δb) |
| Color ΔE* | Color Spectrometer | --- | 0.65 | 0.52 | 0.4 | 0.19 | 0.60 | 1.09 |

As demonstrated by the examples above, it was possible to achieve the vibrant, jet black matching the color master 'Piano Black' in a high gloss finish. The combination of a TPO resin that is capable of a gloss rating of 86 GU at 60 ° that includes a specialized pigment recipe can produce a material mimicking the painted master. With high gloss materials there is difficulty balancing the gloss level with gloss retention after scratch and marring. The materials disclosed herein have excellent scratch and mar resistance, and offer 90% gloss retention after marring when measured at 60°.

The TPO material disclosed herein also meets strict physical requirements set forth by the OEMS. In addition, this molded in-color TPO does not require further manufacturing steps after injection molding to the part. Other TPOs used in the high gloss black color require further finishing steps such as painting and curing which requires time, resources, and is more costly.

Although the present invention and its advantages have been described in detail, it should be understood that various changes, substitutions and alterations can be made.

**Claims**

1. A molded in-color composition comprising:

   (a) 50 to 90 wt. %, based on the total weight of the molded in-color composition, of a first polypropylene homopolymer, wherein the first polypropylene homopolymer has:

   (i) a melt flow rate ranging from about 50 to about 200 g/10 min (ASTM D 1238, 230°C/2.16 kg)
   (ii) a density (ASTM D 792) from about 0.9 to about 0.95 g/cm$^3$,
   (iii) a flexural modulus (ASTM D 790) from about 1500 to about 2500 MPa,
   (iv) a tensile strength at yield (ASTM D 638) from about 25 to about 65 MPa,
   (v) a tensile elongation at yield (ASTM D 638) from about 3 to about 10%, and
   (vi) a notched Izod impact strength (ASTM D 256, 23°C) from about 10 to about 25 J/m;

   (b) 0.1 to 20 wt. %, based on the total weight of the molded in-color composition, of a second polypropylene homopolymer, wherein the second propylene homopolymer has:

   (i) a melt flow rate ranging from about 1 to about 5 g/10 min (ASTM D 1238, 230°C/2.16 kg),
   (ii) a density (ASTM D 792) from about 0.9 to about 0.95 g/cm$^3$,
   (iii) a flexural modulus (ASTM D 790) from about 1500 to about 2500 MPa,
   (iv) a tensile strength at yield (ASTM D 638) from about 25 to about 45 MPa,
   (v) a tensile elongation at yield (ASTM D 638) from about 3 to about 10%, and
   (vi) a notched Izod impact strength (ASTM D 256, 23°C) from about 20 to about 65 J/m,

   (c) 0.1 to 25 wt. %, based on the total weight of the molded in-color composition, of a polyethylene elastomer, wherein the polyethylene elastomer is a copolymer containing ethylene and propylene derived units and has:

   (i) a melt flow rate ranging from about 1 to about 5 g/10 min (ASTM D 1238, 230°C/2.16 kg),
   (ii) a tensile strength at break (ASTM D 638) ranging from about 8 to 20 MPa,
   (iii) a haze from about 3 to 8%,
   (iv) a density (ASTM D 792) from about 0.850 to about 0.880 g/cm$^3$,

   (d) 0.1 to 25 wt. %, based on the total weight of the molded in-color composition, of a first styrene ethylene butylene styrene elastomer, wherein the first styrene ethylene butylene elastomer has:

   (i) a polystyrene content of ranging from 5 to about 17 %,
   (ii) a diblock (EB) content from about 25 to about 45%,
   (iii) a styrene/rubber ratio from about 5/95 to about 20/80,
   (iv) a melt flow rate (ASTM D 1238) from about 2 to about 11 g/10 min (2.16 kg at 230°C),
   (v) a tensile stress at 300% (ASTM D 412) from about 1 to about 5 MPa,
   (vi) a tensile strength at yield (ASTM D 412) from about 15 to about 30 MPa,
   (vii) an elongation at yield (ASTM D 412) from about 650 to about 825%, and
   (viii) and/or a shore A hardness from about 40 to about 50 (ASTM D 2240);

   (e) 0.1 to 25 wt. %, based on the total weight of the molded in-color composition, of a second styrene ethylene butylene styrene elastomer, wherein the second styrene ethylene butylene elastomer has:

(i) a polystyrene content from about 15 to about 25%,
(ii) a melt flow rate (ASTM D 1238) from about 14 to about 25 g/10 min (2.16 kg at 230°C),
(iii) a shore A hardness from about 45 to about 55 (ASTM D 2240),
(iv) a tensile strength from about 5 to about 15 MPa (ASTM D 412),
(v) an elongation at break of greater than 600% (ASTM D 412), and
(vi) a styrene/rubber ratio from about 15/85 to about 25/75;

(f) 0.4 to about 1.5 wt. %, based on the total weight of the molded in-color composition, of one or more pigments comprising from 0.4 to 0.6 wt. %, of carbon black based on the total weight of the molded in-color TPO composition; and 0 to 0.1 wt. %, of a green pigment, based on the total weight of the molded in-color TPO composition; wherein the molded in-color composition has:

(i) a $\Delta L^*$ value within -1.0 to 0 of a $L^*$ value for a standard, wherein the $L^*$ value for the standard is about 24.85,
(ii) a $\Delta a^*$ value within $\pm$ 0.3 of a $a^*$ value for a standard, wherein the $a^*$ value for the standard is about -0.09,
(iii) a $\Delta b^*$ value within $\pm$ 0.3 of a $b^*$ value for a standard, wherein the $b^*$ value for the standard is about -0.74, and
(iv) a $\Delta E^*$ value of $\leq$ 1.0.

2. The molded in-color composition of claim 1, wherein the molded in-color composition has:

(i) a melt flow rate from about 27 to about 34 g/10 min (230°C, 2.16 kg),
(ii) a flexural modulus from about 600 to about 1200 MPa,
(iii) a notched Izod at 23°C from about 20 to about 50 kJ/m$^2$,
(iv) a notched Izod at 0°C from about 4 to about 20 kJ/m$^2$,
(v) a notched Izod at -40°C from about 2 to about 6 kJ/m$^2$,
(vi) a tensile yield strength from about 16 to about 26 MPa,
(vii) a gloss 60° from about 76 to about 90 GU, and
(viii) a density from about 0.88 to about 0.94 g/cm$^3$.

3. The molded in-color composition of claim 2, wherein the molded in-composition further comprises one or more additives.

4. An article formed from the molded in-color composition of claim 1.

5. The article of claim 4, wherein the article is a part of an automobile.


**Patentansprüche**

1. Durchgefärbte Zusammensetzung, umfassend:

(a) 50 bis 90 Gew.%, bezogen auf das Gesamtgewicht der durchgefärbten Zusammensetzung, von einem ersten Polypropylenhomopolymer, wobei das erste Polypropylenhomopolymer aufweist:

(i) eine Schmelzflussrate im Bereich von etwa 50 bis etwa 200 g/10 min (ASTM D 1238, 230 °C/2,16 kg)
(ii) eine Dichte (ASTM D 792) von etwa 0,9 bis etwa 0,95 g/cm$^3$,
(iii) einen Biegemodul (ASTM D 790) von etwa 1500 bis etwa 2500 MPa,
(iv) eine Streckspannung (ASTM D 638) von etwa 25 bis etwa 65 MPa,
(v) eine Streckdehnung (ASTM D 638) von etwa 3 bis etwa 10 %, und
(vi) eine Schlagzähigkeit im Izod-Kerbschlagversuch (ASTM D 256, 23 °C) von etwa 10 bis etwa 25 J/m;

(b) 0,1 bis 20 Gew.%, bezogen auf das Gesamtgewicht der durchgefärbten Zusammensetzung, von einem zweiten Polypropylenhomopolymer, wobei das zweite Propylenhomopolymer aufweist:

(i) eine Schmelzflussrate im Bereich von etwa 1 bis etwa 5 g/10 min (ASTM D 1238, 230 °C/2,16 kg),
(ii) eine Dichte (ASTM D 792) von etwa 0,9 bis etwa 0,95 g/cm$^3$,

(iii) einen Biegemodul (ASTM D 790) von etwa 1500 bis etwa 2500 MPa,
(iv) eine Streckspannung (ASTM D 638) von etwa 25 bis etwa 45 MPa,
(v) eine Streckdehnung (ASTM D 638) von etwa 3 bis etwa 10 %, und
(vi) eine Schlagzähigkeit im Izod-Kerbschlagversuch (ASTM D 256, 23°C) von etwa 20 bis etwa 65 J/m,

(c) 0,1 bis 25 Gew.%, bezogen auf das Gesamtgewicht der durchgefärbten Zusammensetzung, von einem Polyethylenelastomer, wobei das Polyethylenelastomer ein Copolymer ist, das von Ethylen und Propylen abgeleitete Einheiten enthält und aufweist:

(i) eine Schmelzflussrate im Bereich von etwa 1 bis etwa 5 g/10 min (ASTM D 1238, 230 °C/2,16 kg),
(ii) eine Reißfestigkeit (ASTM D 638) im Bereich von etwa 8 bis 20 MPa,
(iii) eine Trübung von etwa 3 bis 8 %,
(iv) eine Dichte (ASTM D 792) von etwa 0,850 bis etwa 0,880 g/cm$^3$,

(d) 0,1 bis 25 Gew.%, bezogen auf das Gesamtgewicht der durchgefärbten Zusammensetzung, von einem ersten Styrol-Ethylen-Butylen-Styrol-Elastomer, wobei das erste Styrol-Ethylen-Butylen-Elastomer aufweist:

(i) einen Polystyrolgehalt im Bereich von 5 bis etwa 17 %,
(ii) einen Gehalt an Diblock (EB) von etwa 25 bis etwa 45 %,
(iii) ein Verhältnis von Styrol/Kautschuk von etwa 5/95 bis etwa 20/80,
(iv) eine Schmelzflussrate (ASTM D 1238) von etwa 2 bis etwa 11 g/10 min (2,16 kg bei 230 °C),
(v) eine Zugspannung bei 300 % (ASTM D 412) von etwa 1 bis etwa 5 MPa,
(vi) eine Streckspannung (ASTM D 412) von etwa 15 bis etwa 30 MPa,
(vii) eine Streckdehnung (ASTM D 412) von etwa 650 bis etwa 825 %, und
(viii) und/oder eine Shore A-Härte von etwa 40 bis etwa 50 (ASTM D 2240);

(e) 0,1 bis 25 Gew.%, bezogen auf das Gesamtgewicht der durchgefärbten Zusammensetzung, von einem zweiten Styrol-Ethylen-Butylen-Styrol-Elastomer, wobei das zweite Styrol-Ethylen-Butylen-Elastomer aufweist:

(i) einen Polystyrolgehalt von etwa 15 bis etwa 25 %,
(ii) eine Schmelzflussrate (ASTM D 1238) von etwa 14 bis etwa 25 g/10 min (2,16 kg bei 230 °C),
(iii) eine Shore A-Härte von etwa 45 bis etwa 55 (ASTM D 2240);
(iv) eine Zugfestigkeit von etwa 5 bis etwa 15 (ASTM D 412);
(v) eine Bruchdehnung von mehr als 600 % (ASTM D 412) und
(vi) ein Verhältnis von Styrol/Kautschuk von etwa 15/85 bis etwa 25/75;

(f) 0,4 bis etwa 1,5 Gew.%, bezogen auf das Gesamtgewicht der durchgefärbten Zusammensetzung, von einem oder mehreren Pigmenten, die 0,4 bis 0,6 Gew.% Ruß, bezogen auf das Gesamtgewicht der durchgefärbten TPO-Zusammensetzung; und 0 bis 0,1 Gew.% eines grünen Pigments, bezogen auf das Gesamtgewicht der durchgefärbten TPO-Zusammensetzung, umfassen;

wobei die durchgefärbte Zusammensetzung aufweist:

(i) einen Wert für $\Delta L^*$ innerhalb von -1,0 bis 0 eines Wertes $L^*$ für einen Standard, wobei der Wert $L^*$ für den Standard etwa 24,85 beträgt,
(ii) einen Wert für $\Delta a^*$ innerhalb von $\pm$ 0,3 eines Wertes $a^*$ für einen Standard, wobei der Wert für $a^*$ für den Standard etwa -0,09 beträgt,
(iii) einen Wert für $\Delta b^*$ innerhalb von $\pm$ 0,3 eines Wertes $b^*$ für einen Standard, wobei der Wert für $b^*$ für den Standard etwa -0,74 beträgt, und
(iv) ein Wert für $\Delta E^*$ von $\leq$ 1,0.

2. Durchgefärbte Zusammensetzung nach Anspruch 1, wobei die durchgefärbte Zusammensetzung aufweist:

(i) eine Schmelzflussrate von etwa 27 bis etwa 34 g/10 min (230 °C/2,16 kg),
(ii) einen Biegemodul von etwa 600 bis etwa 1200 MPa,
(iii) einen Wert im Izod-Kerbschlagversuch bei 23 °C von etwa 20 bis etwa 50 kJ/m$^2$,
(iv) einen Wert im Izod-Kerbschlagversuch bei 0 °C von etwa 4 bis etwa 20 kJ/m$^2$,
(v) einen Wert im Izod-Kerbschlagversuch bei -40 °C von etwa 2 bis etwa 6 kJ/m$^2$,

(vi) eine Streckgrenze von etwa 16 bis etwa 26 MPa,

(vii) einen Glanz bei 60° von etwa 76 bis etwa 90 GU und

(viii) eine Dichte von etwa 0,88 bis etwa 0,94 g/cm$^3$.

3. Durchgefärbte Zusammensetzung nach Anspruch 2, wobei die durchgefärbte Zusammensetzung des Weiteren ein oder mehrere Additive umfasst.

4. Artikel, der aus der durchgefärbten Zusammensetzung gemäß Anspruch 1 gebildet ist.

5. Artikel nach Anspruch 4, wobei der Artikel ein Teil eines Kraftfahrzeugs ist.

**Revendications**

1. Composition moulée en couleur comprenant :

(a) 50 à 90 % en poids, sur la base du poids total de la composition moulée en couleur, d'un premier homopolymère de polypropylène, le premier homopolymère de polypropylène présentant :

(i) un indice de fluidité à chaud situé dans la plage d'environ 50 à environ 200 g/10 min (ASTM D 1238, 230 °C/2,16 kg)

(ii) une masse volumique (ASTM D 792) d'environ 0,9 à environ 0,95 g/cm$^3$,

(iii) un module de flexion (ASTM D 790) d'environ 1500 à environ 2500 MPa,

(iv) une résistance à la traction à la limite élastique (ASTM D 638) d'environ 25 à environ 65 MPa,

(v) un allongement à la traction à la limite élastique (ASTM D 638) d'environ 3 à environ 10 % et

(vi) une résistance au choc sur éprouvette entaillée selon Izod (ASTM D 256, 23 °C) d'environ 10 à environ 25 J/m ;

(b) 0,1 à 20 % en poids, sur la base du poids total de la composition moulée en couleur, d'un second homopolymère de polypropylène, le second homopolymère de propylène présentant :

(i) un indice de fluidité à chaud situé dans la plage d'environ 1 à environ 5 g/10 min (ASTM D 1238, 230 °C/2,16 kg),

(ii) une masse volumique (ASTM D 792) d'environ 0,9 à environ 0,95 g/cm$^3$,

(iii) un module de flexion (ASTM D 790) d'environ 1500 à environ 2500 MPa,

(iv) une résistance à la traction à la limite élastique (ASTM D 638) d'environ 25 à environ 45 MPa,

(v) un allongement à la traction à la limite élastique (ASTM D 638) d'environ 3 à environ 10 % et

(vi) une résistance au choc sur éprouvette entaillée selon Izod (ASTM D 256, 23 °C) d'environ 20 à environ 65 J/m,

(c) 0,1 à 25 % en poids, sur la base du poids total de la composition moulée en couleur, d'un élastomère de polyéthylène, l'élastomère de polyéthylène étant un copolymère contenant des motifs dérivés d'éthylène et de propylène et présentant :

(i) un indice de fluidité à chaud situé dans la plage d'environ 1 à environ 5 g/10 min (ASTM D 1238, 230 °C/2,16 kg),

(ii) une résistance à la traction à la rupture (ASTM D 638) située dans la plage d'environ 8 à 20 MPa,

(iii) un voile d'environ 3 à 8 %,

(iv) une masse volumique (ASTM D 792) d'environ 0,850 à environ 0,880 g/cm$^3$,

(d) 0,1 à 25 % en poids, sur la base du poids total de la composition moulée en couleur, d'un premier élastomère de styrène-éthylène-butylène-styrène, le premier élastomère de styrène-éthylène-butylène présentant :

(i) une teneur en polystyrène située dans la plage de 5 à environ 17 %,

(ii) une teneur en diblocs (EB) d'environ 25 à environ 45 %,

(iii) un rapport styrène/caoutchouc d'environ 5/95 à environ 20/80,

(iv) un indice de fluidité à chaud (ASTM D 1238) d'environ 2 à environ 11 g/10 min (2,16 kg à 230 °C),

(v) une contrainte de traction à 300 % (ASTM D 412) d'environ 1 à environ 5 MPa,

(vi) une résistance à la traction à la limite élastique (ASTM D 412) d'environ 15 à environ 30 MPa,
(vii) un allongement à la limite élastique (ASTM D 412) d'environ 650 à environ 825 % et
(viii) et/ou une dureté Shore A d'environ 40 à environ 50 (ASTM D 2240) ;

(e) 0,1 à 25 % en poids, sur la base du poids total de la composition moulée en couleur, d'un second élastomère de styrène-éthylène-butylène-styrène, le second élastomère de styrène-éthylène-butylène présentant :

(i) une teneur en polystyrène d'environ 15 à environ 25 %,
(ii) un indice de fluidité à chaud (ASTM D 1238) d'environ 14 à environ 25 g/10 min (2,16 kg à 230 °C),
(iii) une dureté Shore A d'environ 45 à environ 55 (ASTM D 2240),
(iv) une résistance à la traction d'environ 5 à environ 15 MPa (ASTM D 412),
(v) un allongement à la rupture supérieur à 600 % (ASTM D 412) et
(vi) un rapport styrène/caoutchouc d'environ 15/85 à environ 25/75 ;

(f) 0,4 à environ 1,5 % en poids, sur la base du poids total de la composition moulée en couleur, d'un ou plusieurs pigments comprenant de 0,4 à 0,6 % en poids de noir de carbone sur la base du poids total de la composition de TPO moulée en couleur ; et 0 à 0,1 % en poids d'un pigment vert, sur la base du poids total de la composition de TPO moulée en couleur ;

la composition moulée en couleur présentant :

(i) une valeur $\Delta$L* à -1,0jusqu'à 0 d'une valeur L* pour une référence, la valeur L* pour la référence étant d'environ 24,85,
(ii) une valeur $\Delta$a* à $\pm$ 0,3 d'une valeur a* pour une référence, la valeur a* pour la référence étant d'environ -0,09,
(iii) une valeur $\Delta$b* à $\pm$ 0,3 d'une valeur b* pour une référence, la valeur b* pour la référence étant d'environ -0,74 et
(iv) une valeur $\Delta$E* $\leq$ 1,0.

2. Composition moulée en couleur selon la revendication 1, la composition moulée en couleur présentant :

(i) un indice de fluidité à chaud d'environ 27 à environ 34 g/10 min (230 °C, 2,16 kg),
(ii) un module de flexion d'environ 600 à environ 1200 MPa,
(iii) une résistance au choc sur éprouvette entaillée selon Izod à 23 °C d'environ 20 à environ 50 kJ/m$^2$,
(iv) un résistance au choc sur éprouvette entaillée selon Izod à 0 °C d'environ 4 à environ 20 kJ/m$^2$,
(v) un résistance au choc sur éprouvette entaillée selon Izod à -40 °C d'environ 2 à environ 6 kJ/m$^2$,
(vi) une limite d'élasticité à la traction d'environ 16 à environ 26 MPa,
(vii) un brillant à 60 ° d'environ 76 à environ 90 GU et
(viii) une masse volumique d'environ 0,88 à environ 0,94 g/cm$^3$.

3. Composition moulée en couleur selon la revendication 2, la composition moulée en couleur comprenant en outre un ou plusieurs additifs.

4. Article formé à partir de la composition moulée en couleur selon la revendication 1.

5. Article selon la revendication 4, l'article étant une partie d'une automobile.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010099820 A
- US 8008400 B
- US 8039540 B
- US 8227550 B